# EUROPEAN PATENT APPLICATION

(11) **EP 2 323 239 A1**
(43) Date of publication of application: **18.05.2011**
(21) Application number: 09425455.4
(22) Date of filing: 13.11.2009
(51) Int. Cl.: H02J 7/14

(54) **Integrated station for DC electric supply to geographically remote loads, for instance telecommunications antenna**

(71) Applicant: Ascot S.R.L., 93012 Gela (CL) (IT)
(72) Inventor: Greca, Luigi, 93012 Gela (Caltanissetta) (IT); Fasciana, Gaetano, 93012 Gela (Caltanissetta) (IT)
(74) Representative: Botti, Mario

(57) **Abstract**

A description is given of an integrated station (1) for DC electric supply to isolated electrical loads (20), such as for example telecommunications antennas, of the type comprising:
- a framework (5) for enclosure and protection;
- a generating set (2) in said framework;
- a generator of direct current (4) in said generating set actuated by an internal combustion engine (6);
**characterised in that** it further comprises:
- at least one set (15) of batteries for DC supply to the electrical load (20);
- an electronic command and control unit (10) for periodically regulating the charging and discharging of said set (15) of batteries;
- said unit (10) actuating the engine (6) associated with said generator (6) at a number of revs that varies according to the charge curve of said set (15) of batteries and the external load demand.

This integrated station (1) drastically reduces the maintenance intervals and also the consumption of fuel of the generating set.

## Description

### Field of application

The present invention relates in its more general aspect to an integrated station for DC electric supply to geographically isolated loads, for example telecommunications antennas.

The invention relates in particular, but not exclusively, to an integrated station for DC electric supply to geographically isolated loads, such as for example telecommunications antennas, of the type comprising:
- a protection and enclosure framework;
- a generating set in said framework;
a DC generator in said generating set actuated by an internal combustion engine.

The invention likewise relates to a method for direct DC electric supply to a geographically isolated load, such as for example a telecommunications antenna, and by means of at least one generating set appliance comprising:
- a support, protection and enclosure framework;
- a generating set in said framework;
- a DC generator in said generating set actuated by an internal combustion engine.

### Prior art

As is well known, in the specific technical area of generating sets intended to supply electrical loads situated in geographically remote or isolated locations there is the primary need to save fuel as much as possible in order to reduce the running costs of the generating set.

This primary need is associated with a further need which is that of reducing as far as possible the maintenance work on the generating set, without reducing but instead extending the working life of the generating set itself.

The prior art seeks to offer a solution to these combined needs, for example by optimising the functioning of the internal combustion engine which actuates the generator of the generating set and/or by oversizing the fuel tank associated with this engine.

However this solution has not proved to be totally satisfactory, succeeding in achieving only small percentages of improvement in the consumption of fuel per energy produced or in the continuity of the service provided by the generating set as a whole.

The technical problem at the basis of the present invention is that of devising an integrated station for DC electric supply to geographically isolated loads, such as for example telecommunications antennas, which station has structural and functional features such as to allow a drastic reduction in the running costs with the same service provided or energy or electrical power supplied and a considerable lengthening of the working life of the generating set incorporated in the same station.

Another object of the present invention is that of making available to the user a sort of UPS unit which allows, in the event of a fault or temporary stoppage of the generating set, the possibility of delaying maintenance work, guaranteeing in any case supply to the load or the possibility of performing operations of maintenance and reset, maintaining the supply to the load for a predetermined length of time.

A further object of the present invention is that of making the generating set of the integrated supply station work always at an optimal rate, reducing the consumption of fuel and the needs for periodical maintenance.

Last but not least, an object of the present invention is that of making available an integrated station wherein the direct current supplied to the load is rectified in the simplest and most direct way possible, avoiding a complex phase of regulation or conversion of the alternating current produced by the generator.

### Summary of the invention

The proposed idea which lies at the basis of the present invention is that of making available apparatus of the "hybrid" type, i.e. capable of supplying the load via direct current delivered by a set of batteries incorporated in the supply station and of using the generating set to charge this set of batteries periodically, operating the internal combustion engine which actuates the generator of the generating set at an optimal rate of efficiency and regulating or alternating charging and discharging of the set of batteries always in an optimal manner.

Advantageously the periodical recharging takes place preferably at regular time intervals and the batteries are dimensioned in such a way as to withstand multiple cycles of charging and discharging.

Moreover generation of the direct current which supplies the set of batteries takes place by means of a DC generator which provides for the presence only of an alternator and of a relative rectifier in that regulation of the direct current to the level required by users at 24V or 48V is performed upstream of the rectifier on the excitation of the alternator so as to have AC voltage which is always suitable for guaranteeing the correct value of direct voltage in output in every instantaneous load condition.

Finally the work rate of the engine is regulated, in every load condition, to that of optimal efficiency of the same engine for that load condition.

In accordance with the abovementioned proposed solution the technical problem is solved by an integrated station of the type previously mentioned and characterised in that it further comprises:
- at least one set of batteries for DC electric supply of the electrical load;
- an electronic command and control unit for regulating the phases of charging and discharging of said set of batteries;
- said unit actuating the engine associated with said generator at a number of revs that varies according to the charge curve of said set of batteries and the external load demand.

The invention also relates to a method of the type described previously and characterised in that it provides an integrated station incorporating said apparatus, and:
- at least one set of batteries for the DC electric supply of the electrical load;
- an electronic command and control unit for regulating periodically the charging and discharging of said set of batteries;
- said unit actuating the engine associated with said generator at a number of revs that varies according to the charge curve of said set of batteries and of the external load demand.

The features and advantages of the apparatus and of the method according to the invention will be made clearer by the description, given herein below, of one of its specific embodiments given by way of a non-limiting example with reference to the accompanying drawings.

### Brief description of the drawings

Figure 1 shows a schematic side view of an integrated station according to the invention for DC electric supply to a geographically isolated electrical load;
Figure 2 is a photographic image of a detail of the integrated station of

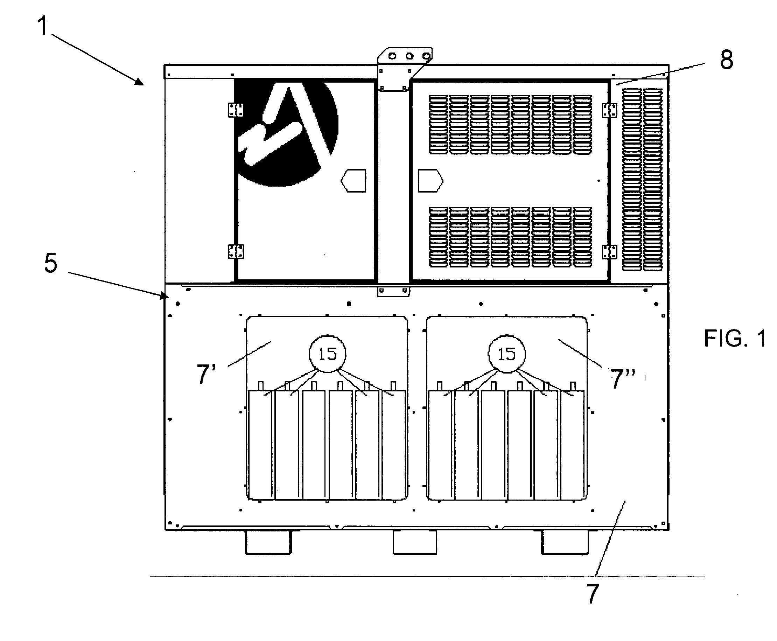

Figure 1 wherein a set of batteries and an electronic command and control unit can be seen;

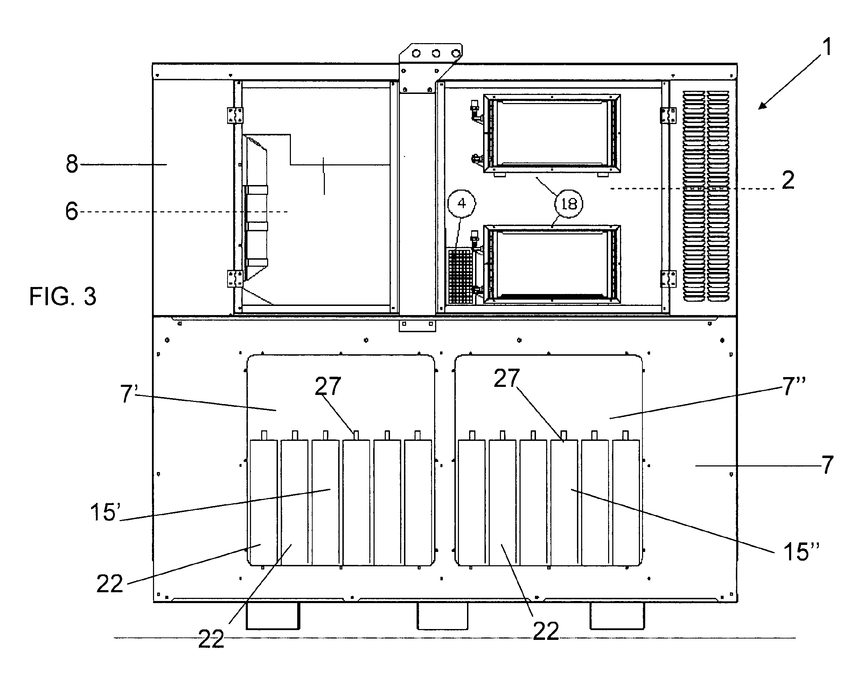

Figure 3 shows a schematic side view similar to that of Figure 1 but wherein the station according to the invention is shown with some of the doors partially open;

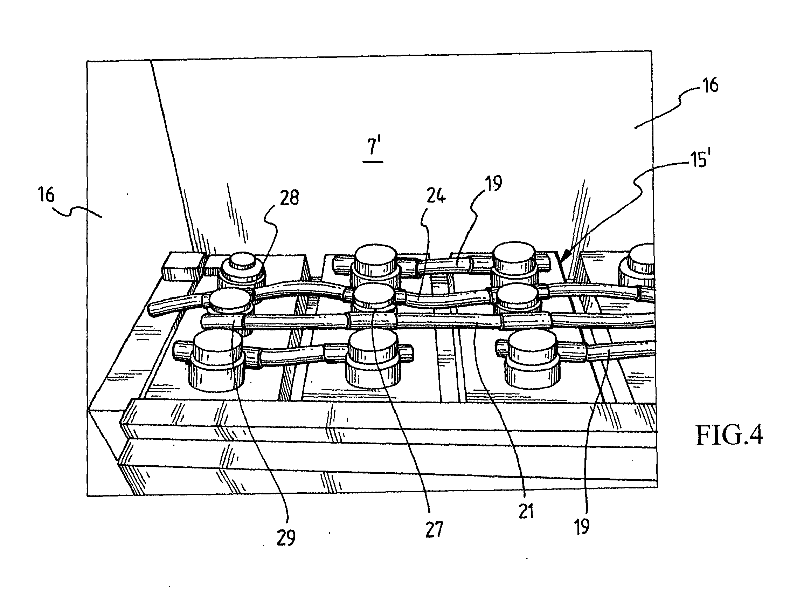

Figure 4 shows a photographic image of a further detail of the integrated station of Figure 1;

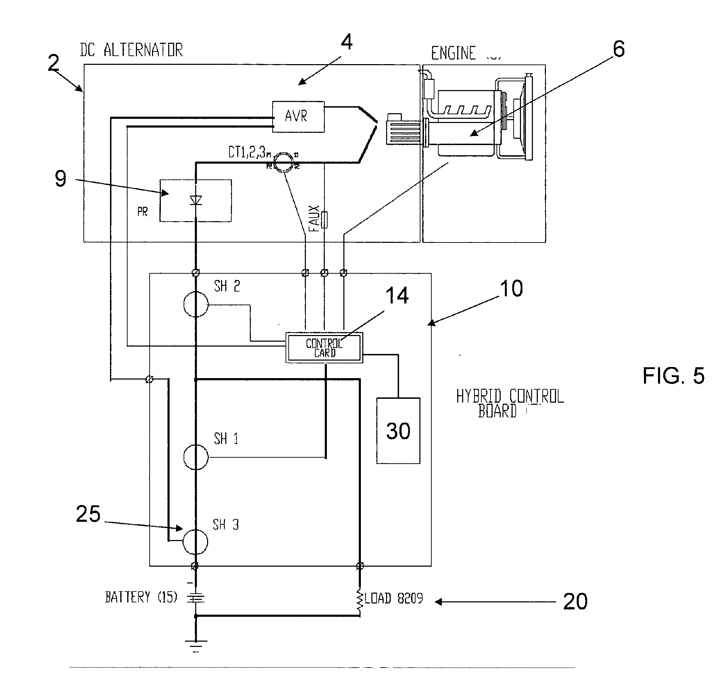

Figure 5 shows a view in schematic blocks of a command and control unit incorporated in the integrated station of the present invention;

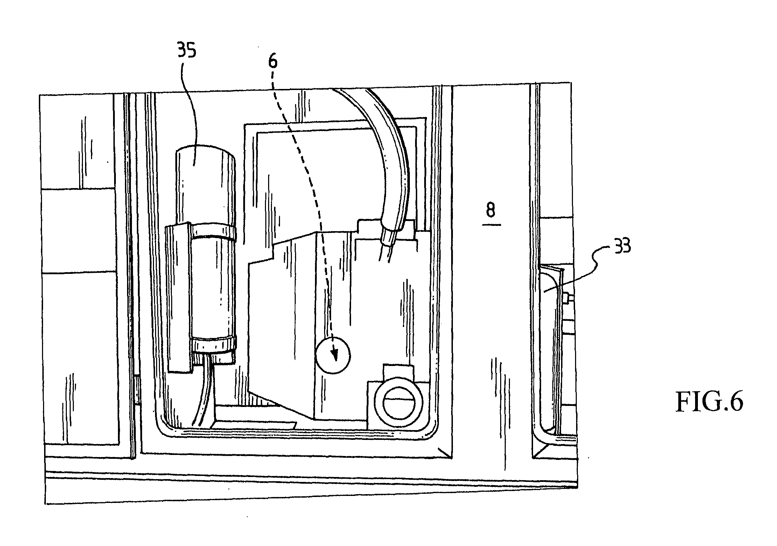

Figure 6 is a photographic image of a detail of the station of Figure 1.

### Detailed description

Referring to these drawings, 1 denotes overall and schematically an integrated and monolithic station for DC electric supply to geographically remote or isolated electrical loads 20, such as for example telecommunications antennas or any type of electrical load situated far from a connection to an electrical distribution grid. The electrical load 20 is external to the station 1 and is schematised only in Figure 5.

The integrated station 1 comprises apparatus provided with a generating set 2 which includes a DC generator 4 and which is actuated by an internal combustion engine 6.

For the purposes of the present invention the generator 4 comprises only an alternator and a relative rectifier, in that the regulation of the direct current to the level required by the users at 24V or at 48V is performed upstream of the rectifier on the excitation of the alternator so as to have AC voltage which is always suitable for guaranteeing the correct value of DC voltage in output in every instantaneous load condition.

That is to say that, for the purposes of the present invention, it is not necessary to equip the generator 4 with a final regulator or converter stage. This represents a saving in components and costs compared to the solutions of the prior art which propose the use of conventional generating sets.

The alternator of the generator 4 is actuated by the internal combustion engine 6, for example a diesel cycle engine powered conventionally with naphtha or diesel.

The integrated station 1 comprises advantageously at least one set of batteries 15 and an electronic command and control unit 10 which regulates and supervises the functioning of the engine 6 and the phases of charging and discharging of the set of batteries. The electronic unit 10 performs other functions of control of the entire station 1.

The integrated station 1 comprises a framework 5 for support, enclosure and protection.

Inside the framework 5 the following are housed: the generating set 2, the set of batteries 15 and the electronic command and control unit 10 which has a plurality of signal inputs receiving electrical pulses from various sensors of sets 2 and 15 and has a plurality of command outputs connected to various actuator devices of the sets 2 and 15, as will be made clearer by the rest of the description and by Figure 4.

The framework 5 has a substantially parallelepiped shape and comprises a lower portion 7 and an upper portion 8.

The lower portion 7 houses centrally a fuel tank 3 for the engine 6. The presence of the tank could be optional in the sense that there is nothing against providing this tank in the vicinity of the station 1 and in such a way as to be structurally independent and connectable to the engine of the generating set 2 by means of a conduit for feeding fluid fuel.

However, in the embodiment described here purely as a non-limiting example, in the lower portion 7 of the framework 5 a central housing is provided for the tank 3.

Advantageously, on opposite longitudinal sides of the lower portion 7, substantially parallel to the long sides of the housing provided for the tank 3, there are respective spaces 7' and 7" for housing respective sets of batteries 15' and 15".

The spaces 7', 7" for housing of the sets 15' and 15" of batteries on opposite sides of the framework 5 allow facilitation of the maintenance operations and a check on the state of the batteries or removal of one or more of them. Moreover, in this way, a better balancing of the total weight of the integrated station 1 is achieved, given that the set of batteries 15, composed of the subsets 15' and 15", contributes to about half of the total weight of the integrated station 1.

The upper portion 8 of the framework 5 houses the generating set 2 with the generator 4 actuated by the internal combustion engine 6.

Advantageously, according to the present invention, the diesel engine 6 is a variable speed engine with continuity. More particularly the work pace of the engine is regulated, in every load condition, to that of optimal efficiency of the same engine for that load condition.

In other words, the engine 6 is subject to varying of the working revs or turns on command and control of the electronic unit 10 in order to function substantially in the region of a maximum torque speed or maximum efficiency according to the needs of supply of the load. For this purpose the electronic unit 10 detects by means of sensors the number of rotation revs of the engine 6 and the absorption of current or the voltage of the set of batteries 15, regulating the supply of fuel to the engine in order to vary the number of revs thereof according to the recharging needs.

Since users normally need to supply loads which are with absorption of variable power throughout twenty-four hours, the engine 6 of the present invention allows regulation of its number of revs so as to work as far as possible in the region of the maximum torque speed at which there is maximum generation of electrical power for a given engine.

Even more particularly, when the set of batteries 15, always to be understood as composed of the subsets 15' and 15", needs to absorb the maximum recharge current, the engine 6 can be made to function at optimal rate supplying the maximum electrical power. Vice versa, when the set of batteries 15 has reached maximum charge, the engine 6 can be made to function at a lower rotation rate, obtaining a saving in the consumption of fuel.

Again in accordance with the principle of the present invention, the generator 4 of the generating set 5 actuated by the engine 6 generates in output direct current electrical power which supplies directly the set of batteries 15 via an automatic protection circuit breaker 12 which protects the generating set 2 from a possible short circuit of one or both sets of batteries 15', 15".

The batteries of the set 15 can be electrically connected in series or in parallel according to the needs of supply of the load at 24 V or at 48 V DC. The connections between the batteries are illustrated by lines 19 of Figure 4.

The batteries of sets 15' and 15" are substantially interposed as a buffer between the generating set 2 and the load 20 and via a second automatic protection circuit breaker 25 which performs its action in the case of a possible short circuit on the load 20.

The batteries of the set 15 are preferably rechargeable lead acid batteries, without thereby entailing any limitation on the rights of the Applicant, and are each provided with a top-up cap 27 also provided with a float valve and a relief valve 29 for the gases produced by the battery. Figure 4 shows a detail wherefrom it is possible to note the presence of the white float 23 when the liquid in the container 22 of a battery is at its maximum level.

Advantageously, each battery is housed in a respective container 22 which is oversized in relation to a container normally used for that type of batteries and with the same generated DC electrical power or voltage. This technique allows the containing of a quantity of acid higher than usual and with covering of the cells of the battery, for example a larger volume of acid by about 20%, in such a way as to guarantee a predetermined reserve in consideration of the fact that the integrated station 1 is installed near geographically remote and isolated electrical loads and the aim is to reduce to a minimum the maintenance work.

The batteries of the sets 15' and 15" are regularly arranged in rows one next to the other with the top-up caps 27 turned upwards.

More particularly, each cap 27 has a first through hole 28 in fluid communication with a conduit 24 for feeding acid mixture liquid. The conduit 24 has a feed section which runs above all the caps 27 and all the holes 28 of the caps 27 of the batteries are connected to this feed section of the conduit 24 which also has a join section which descends from a tank 35 of acid situated in the upper portion 8 of the framework 5.

In this way the liquid contained in each battery is topped up in an independent manner, removing the necessary quantity through the float valve provided in each cap 27 and by gravitational falling from the tank 35.

The other holes 29 of the caps 27 are in fluid communication one with the other and by means of an emission conduit 21 which runs parallel to the feed section of the conduit 24 and which flows out into a ventilated space 33 of the upper portion 8 of the framework 5.

Advantageously, the sets 15' and 15" of batteries are housed in spaces 7' and 7" insulated by walls 16 of insulant material and maintained at a temperature constantly below 30° or 40° C (according to the climates) to increase their working life.

The electronic unit 10 actuates an air-conditioning system 18 inside the framework 5 whenever the internal temperature exceeds for example 27°C or 33°C.

The air-conditioning system 18 is supplied electrically by the same set of batteries 15.

Referring in particular to the example of Figure 5, an illustration with schematic functional blocks is now given of the structure and the functioning of the electronic command and control unit 10 which also incorporates a transmitter 30 of signals to standard.

The unit 10 comprises a microprocessor motherboard 14 having a plurality of inputs of signals connected to sensors of the alternator 4, of the engine 6 and also to temperature sensors of the space for housing of the same.

The board 14 is connected in output to protection circuit breakers SH, to the generating set 2 and to the transmitter 30. The board 14 is coupled to the batteries 15 and to the load 20.

The unit 10 is therefore able to perform different operations of supervision of the integrated station 1 and to report possible states of fault or malfunctioning, such as for example:
- start of reserve or lack of fuel in the tank 3;
- malfunctioning of the generating set 2 or of the relative alternator 4 or engine 6;
- level of DC supply voltage too low;
- level of current supplied too low;
- excessive temperature;
and many other types of alarm which, by means of a known function of remote control, are transmitted through the air to a remote data receiving unit.

In accordance with the method of the present invention, the electronic command and control unit 10 periodically actuates the generating set 2 to charge the set of batteries 15.

This periodical recharging can take place at pre-established intervals of time, for example every six hours, alternated or spaced by periods of time wherein the set of batteries 15 supplies DC power directly to the load 20 of the users without being recharged by the generating set 2.

Advantageously, the period of discharge has been chosen so that the residual charge of the batteries is at least 50%, in such a way as to both encourage the phase of recharging and avoid excessive discharges of the set of batteries 15 which reduce the working life thereof.

It should be noted however that the maintaining of a residual charge of at least 50% of the storage capacity of the set of batteries 15 also allows conferring to the integrated station 1 of the capacity of sustaining supply to the load per a predetermined length of time also in the case of a fault which requires the intervention of maintenance staff. The latter may reach the integrated station 1 with awareness that the service supplied has not however been interrupted.

The fact that the set of batteries 15 is also maintained at a virtually constant temperature in the framework 5 likewise prolongs the working life of the batteries of the sets 15' and 15".

The electronic unit 10 does not only regulate in timed mode the cycle of charging and discharging of the set of batteries, but is also able to interrupt charging on detection of a charge level that is more than adequate for the purposes of supply of the load. Therefore recharging or its interruption takes place both on a timed basis and on a consensus signal detected by means of sensors of the charge level or of absorption of current by the set of batteries 15.

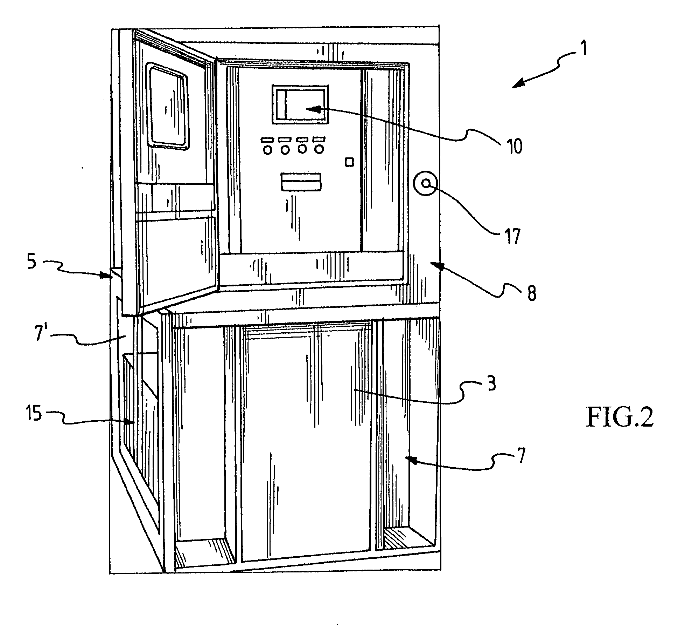

In the vicinity of the electronic unit 10 there is a conventional power socket 17 of the plug-in type for connecting the load of the users, which can be seen in Figure 2.

Irrespective of the considerations stated previously, it is worth noting that intervention on the generating set 2 could also allow a prolonging of the intervals of maintenance, exploiting in combination the systems whereof the integrated station 1 is equipped. In fact it could be decided to equip the engine 6 with fine mesh oil filters and/or with a unit for recycling or replacement of filtered oil taken from a special tank.

This system allows an improvement in the functioning of the engine 6 and lengthening of the maintenance periods.

This lengthening of the maintenance periods of the engine contributes to lengthening further and overall the intervention by specialist personnel on the site of installation of the integrated station of the present invention.

The apparatus and the method according to the present invention effectively solve the technical problem and achieve numerous advantages.

In the first place the apparatus according to the invention reduces drastically, from 30% to even 50%, the consumption of fuel for the same energy supplied to the load and the cost for the maintenance of the generator by about 50%, being approximately 50% the number of hours of work of the prime mover in relation to the use of a normal generating set. Secondly the apparatus according to the invention achieves extensive range without the need for operative maintenance; operative ranges of more than 1000 hours of operation of the prime mover can even be achieved, also according to the size of the fuel tank which, considering that the hours of operation are 50%, therefore allows 2000 hours of interval between one maintenance intervention and the next.

Moreover the engine of the 3 operates practically always in maximum torque speed and for predetermined and regularly staggered intervals of time. This allows the working life of the engine to be doubled.

Overall therefore the running costs of the integrated station for DC electric supply according to the invention are enormously reduced compared to those of a normal generating set, considering also the costs for the logistics linked to the topping-up of fuel and to the intervention by maintenance personnel.

The command and control unit operates total supervision of the functions of the apparatus 1 and allows timely indication of possible faults or malfunctioning by means of the remote control functions.

It is worth noting that the availability of the integrated apparatus according to the present invention allows the hypothesis of the use of two stations of these stations as a twin system, in order to reduce the capacity of supply to the load or reduce virtually to half the scheduled maintenance intervention.

In this hypothesis it is also possible to use a single control unit 10 which can be connected electrically to an integrated station also without a control unit. Obviously it would be necessary to have a connection by means of a quick coupling connector which, in addition to the electric supply, connects the sensors and the actuators present in the station without control unit to the control unit of the integrated station 1 with everything.

An equally important advantage is the fact that the investment necessary for the adoption of the integrated station of the present invention is proportional to the expense of supplying the isolated electrical load in a manner structurally independent of the availability of a connection to the electrical distribution grid.

## Claims

1. Integrated station (1) for DC electric supply to geographically isolated electrical loads (20), such as for example telecommunications antennas, of the type comprising:
- a support, enclosure and protection framework (5);
- a generating set (2) in said framework;
- a DC generator (4) in said generating set (2) actuated by an internal combustion engine (6);
**characterised in that** it further comprises:
- at least one set (15) of batteries for DC supply to the electrical load (20);
- an electronic command and control unit (10) for periodically regulating the charging and discharging of said set (15) of batteries;
- said unit (10) actuating the engine (6) associated with said generator (4) at a number of revs that varies according to the charge curve of said set (15) of batteries and the external load demand.

2. Integrated station according to claim 1, **characterised in that** the phases of charging and discharging of the set (15) of batteries take place at regular time intervals.

3. Integrated station according to claim 1, **characterised in that** said set (15) of batteries is divided into two sets (15', 15") housed in respective insulated and refrigerated spaces (7', 7") and with facilitated access, being situated on opposite sides of said framework (5).

4. Integrated station according to claim 1, **characterised in that** said generator (4) of the generating set (2) comprises only an alternator and a relative rectifier.

5. Integrated station according to claim 3, **characterised in that** the batteries of said set (15) are lead acid and each have a container provided above with a top-up cap (27) in fluid communication with a conduit (24) for feeding acid by means of a float valve (23).

6. Integrated station according to claim 5, **characterised in that** in said cap (27) an emission hole (29) is provided, connected by means of an emission conduit (21) to a ventilated space (33) of said framework (5).

7. Integrated station according to claim 1, **characterised in that** said framework (5) comprises a lower portion (7) which houses centrally a fuel tank (3) and an upper portion (8) for said generating set (2).

8. Integrated station according to claim 7, **characterised in that** two respective sets (15', 15") of batteries are housed in corresponding spaces (7', 7") accessible from the outside on the longitudinal sides of said lower portion (7).

9. Method for directly DC supply to a geographically isolated electrical load (20), such as for example a telecommunications antenna, and by means of at least one generating set apparatus comprising:
- a support, protection and enclosure framework (5);
- a generating set (2) in said framework;
- a DC generator (4) in said generating set (2) actuated by an internal combustion engine (6);
**characterised in that** it provides an integrated station (1) incorporating said apparatus and:
- at least one set (15) of batteries for DC supply to the electrical load (20);
- an electronic command and control unit (10) for periodically regulating the charging and discharging of said set (15) of batteries;
- said unit (10) actuating the engine (6) associated with said generator (4) at a number of revs that varies according to the charge curve of said set (15) of batteries and the external load demand.

10. Method according to claim 9, **characterised in that** the phases of charging and discharging of the set (15) of batteries take place at regular time intervals.
